# EUROPEAN PATENT APPLICATION

(11) **EP 4 847 653 A1**
(43) Date of publication of application: **02.12.2026**
(21) Application number: 25786388.6
(22) Date of filing: 28.03.2025
(51) Int. Cl.: C22C 38/00, C21D 9/46, C22C 38/50, C22C 38/54, C25B 1/04, C25B 9/00, C25B 9/23, C25B 9/65

(54) **STAINLESS STEEL MATERIAL FOR SOLID OXIDE WATER ELECTROLYSIS**

(30) Priority: 10.04.2024 JP 2024063556
(71) Applicant: Nippon Steel Corporation, Tokyo 100-8071 (JP)
(72) Inventor: MATSUMOTO,Mitsuki, Tokyo 100-0005 (JP); HATANO,Masaharu, Tokyo 100-0005 (JP)
(74) Representative: J A Kemp LLP
(86) International application number: PCT/JP2025/013015
(87) International publication number: WO 2025/216105

(57) **Abstract**

A stainless steel material for solid oxide water electrolysis contains, on a mass basis, C: 0.030% or less, Si: from 1.6% to 3.5%, Mn: from 0.10% to 1.00%, P: 0.050% or less, S: 0.0030% or less, Cr: from 16.0% to 21.0%, Al: 1.00% or less, N: 0.030% or less, Nb: 1.00% or less, Ti: 1.00% or less, Ni: 1.00% or less, and Cu: 1.00% or less, with the balance being Fe and impurities.

## Description

### [Technical Field]

The present invention relates to a stainless steel material for solid oxide water electrolysis.

### [Background Art]

In recent years, the development and introduction of hydrogen production technologies by CO₂-free water electrolysis have been accelerating. Among these, water electrolysis technology using solid oxide electrolysis cells (SOECs: Solid Oxide Electrolysis Cells) (hereinafter referred to as "solid oxide water electrolysis") has been attracting attention because it offers the highest hydrogen production efficiency (e.g., Patent Literature 1).

The solid oxide water electrolysis generates hydrogen and oxygen by bringing steam to a high-temperature state (700 to 800°C) to promote water electrolysis. For this reason, components such as an oxygen electrode (anode) are exposed to a high-temperature environment containing a high concentration of oxygen and the like. Stainless steel materials are being considered as a material for these components. However, in a high-temperature environment containing a high concentration of oxygen and the like, an oxide film on the stainless steel materials tends to become thick, and therefore electrical conductivity is likely to decrease.

On the other hand, solid oxide fuel cells (SOFCs: Solid Oxide Fuel Cells), which generate electricity from hydrogen reformed from city gas and the like and from air, are known as a technology similar to solid oxide water electrolysis. Stainless steel materials having excellent electrical conductivity at a temperature of 600°C or lower are used for components of solid oxide fuel cells (e.g., Patent Literature 2).

### [Citation List]

### [Patent Literatures]

[PTL 1] Japanese Patent Application Publication No. 2022-119078 A
[PTL 2] Japanese Patent Application Publication No. 2022-136912 A

### [Summary of Invention]

### [Technical Problem]

As described above, stainless steel materials used for solid oxide water electrolysis are exposed to a high-temperature environment containing a high concentration of oxygen and the like, and therefore, it is necessary to suppress oxidation and reduce the thickness of the oxide film even under such an environment to ensure electrical conductivity.

However, since stainless steel materials used for solid oxide fuel cells are not intended for use under the aforementioned environment (particularly in a high-concentration oxygen atmosphere), when such materials are used for solid oxide water electrolysis, the oxide film may become thick and electrical conductivity may decrease.

The present invention has been made to solve the aforementioned problems specific to stainless steel materials used for solid oxide water electrolysis, and an object thereof is to provide a stainless steel material for solid oxide water electrolysis that can suppress oxidation in a high-temperature environment containing a high concentration of oxygen and the like, reduce the thickness of the oxide film, and ensure electrical conductivity.

### [Solution to Problem]

As a result of intensive studies to solve the aforementioned problems, the present inventors have found that the aforementioned problems can be solved by controlling the composition of the stainless steel material, and they have completed the present invention.

Thus, the present invention is a stainless steel material for solid oxide water electrolysis, comprising, on a mass basis, C: 0.030% or less, Si: from 1.6% to 3.5%, Mn: from 0.10% to 1.00%, P: 0.050% or less, S: 0.0030% or less, Cr: from 16.0% to 21.0%, Al: 1.00% or less, N: 0.030% or less, Nb: 1.00% or less, Ti: 1.00% or less, Ni: 1.00% or less, and Cu: 1.00% or less, with the balance being Fe and impurities.

### [Advantageous Effects of Invention]

According to the present invention, it is possible to provide a stainless steel material for solid oxide water electrolysis that can suppress oxidation in a high-temperature environment containing a high concentration of oxygen and the like, reduce the thickness of the oxide film, and ensure electrical conductivity.

### [Brief Description of Drawings]

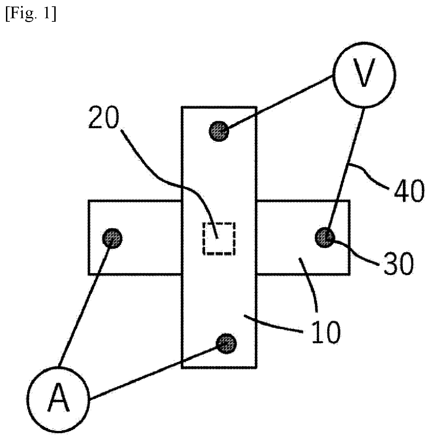

[Fig. 1] Fig. 1 is a schematic top view of a test specimen for measuring electrical conductivity.

### [Description of Embodiments]

In a high-temperature environment containing a high concentration of oxygen and the like, an oxide film such as a Cr₂O₃ film having excellent oxidation resistance is formed on a surface of the stainless steel material. Since this Cr₂O₃ film is a p-type semiconductor, it tends to become thick, causing a decrease in electrical conductivity. Furthermore, while Al₂O₃ films and SiO₂ films also have excellent oxidation resistance, they have low electrical conductivity. For this reason, to ensure electrical conductivity in a high-temperature environment containing a high concentration of oxygen and the like, it is desirable to form an oxide film primarily composed of a Cr₂O₃ film having a small thickness. The addition of Si is effective for forming such an oxide film; however, when a continuous SiO₂ film is formed directly beneath the Cr₂O₃ film, electrical conductivity decreases.

Accordingly, as a result of examining the composition of the stainless steel material, it has been found that by appropriately controlling the contents of Si, Cr, and Mn, it is possible to form an oxide film primarily composed of a Cr₂O₃ film having a small thickness while suppressing the formation of a continuous SiO₂ film in a high-temperature environment containing a high concentration of oxygen and the like.

The present invention has been completed based on these findings.

Hereinafter, embodiments of the present invention will be specifically described. It should be understood that the invention is not limited to the following embodiments, and those which have appropriately added changes, improvements and the like to the following embodiments based on knowledge of a person skilled in the art without departing from the spirit of the invention fall within the scope of the invention.

Here, the "%" expression regarding components as used herein means "% by mass" unless otherwise specified.

As used herein, a numerical range expressed using "to" means a range including numerical values described before and after "to" as a lower limit value and an upper limit value, unless otherwise specified. Further, as used herein, a numerical range where a numerical value is accompanied by "more than" or "less than" means a range that does not include the numerical value as a lower limit or an upper limit.

Also, regarding the numerical ranges described stepwise as described herein, the upper limit of a certain stepwise numerical range may be replaced with the upper limit of another stepwise numerical range or a value shown in Examples. Also, regarding the numerical ranges described stepwise as described herein, the lower limit of a certain stepwise numerical range may be replaced with the lower limit of another stepwise numerical range or a value shown in Examples. Furthermore, a numerical range obtained by combining any of the upper limit values and lower limit values described in this specification may also be employed.

The stainless steel material for solid oxide water electrolysis according to an embodiment of the present invention (hereinafter abbreviated as "stainless steel material") has a composition containing, on a mass basis, C: 0.030% or less, Si: from 1.6% to 3.5%, Mn: from 0.10% to 1.00%, P: 0.050% or less, S: 0.0030% or less, Cr: from 16.0% to 21.0%, Al: 1.00% or less, N: 0.030% or less, Nb: 1.00% or less, Ti: 1.00% or less, Ni: 1.00% or less, and Cu: 1.00% or less, with the balance being Fe and impurities.

The term "impurities" as used herein means components that are mixed in due to various factors including raw materials such as ore and scrap and manufacturing steps when industrially producing ferritic stainless steel materials, and that are acceptable within a range that does not adversely affect the present invention. For example, the impurities include unavoidable impurities.

Also, the term "stainless steel material" as used herein means a material formed of stainless steel, and a shape of the material is not particularly limited. Examples of the shape of the material include a sheet shape (including a strip shape), a rod shape, and a tubular shape. Further, the material may be various shaped steels having cross-sectional shapes such as T-shape and I-shape.

In addition, with respect to the content of each element as used herein, containing or comprising "xx % or less" means that it contains xx % or less but contains an amount more than 0% (especially, more than the impurity level).

Furthermore, the stainless steel material according to an embodiment of the present invention may further contain, as necessary, one or more selected from Mo: 0.50% or less, B: 0.0050% or less, Mg: 0.0100% or less, Ca: 0.0100% or less, V: 0.50% or less, Co: 0.50% or less, W: 0.50% or less, Sn: 0.50% or less, Zr: 0.50% or less, Ga: 0.05% or less, Hf: 0.10% or less, and REM: 0.10% or less.

Each component will be described in detail below.

### <C: 0.030% or less>

C is an element that affects the electrical conductivity of the stainless steel material in a high-temperature environment (particularly from 700°C to 800°C). When the C content is excessively high, the electrical conductivity decreases. Therefore, the C content is 0.030% or less, preferably 0.029% or less, and more preferably 0.028% or less. On the other hand, the lower limit of the C content is not particularly limited, but reducing the C content requires more time in a refining step, which may increase manufacturing costs. Therefore, the C content is preferably 0.001% or more, and more preferably 0.002% or more.

### <Si: 1.6 to 3.5%>

Si is an element that enhances the heat resistance of the stainless steel material and is effective for the formation of an oxide film. When the Si content is excessively low, oxidation in a high-temperature environment containing a high concentration of oxygen and the like cannot be suppressed, and the oxide film becomes thick. For this reason, the Si content is 1.6% or more, preferably 1.7% or more, and more preferably 1.8% or more. On the other hand, when the Si content is excessively high, a continuous SiO₂ film tends to be formed directly beneath the Cr₂O₃ film in a high-temperature environment containing a high concentration of oxygen and the like, and therefore electrical conductivity decreases. From the viewpoint of suppressing the formation of this continuous SiO₂ film, the Si content is 3.5% or less, preferably 3.4% or less, and more preferably 3.3% or less.

### <Mn: 0.10 to 1.00%>

Mn is an element that, in a high-temperature environment containing a high concentration of oxygen and the like, itself forms spinel-type oxides to improve electrical conductivity and also suppresses the formation of a continuous SiO₂ film through the formation of composite oxides with Si (such as MnSi₂O₅). From the viewpoint of ensuring this effect, the Mn content is 0.10% or more, preferably 0.13% or more, and more preferably 0.15% or more. On the other hand, when the Mn content is excessively high, a large amount of (FeMnCr)₃O₄ is formed, and the oxide film becomes thick, and therefore electrical conductivity decreases. In addition, heat resistance may also decrease. For this reason, the Mn content is 1.00% or less, preferably 0.95% or less, and more preferably 0.90% or less.

### <P: 0.050% or less>

P is an element that may reduce the toughness of the stainless steel material. Therefore, the P content is 0.050% or less, preferably 0.045% or less, and more preferably 0.040% or less. On the other hand, the lower limit of the P content is not particularly limited, but reducing the P content requires more time in a refining step, which may increase manufacturing costs. Therefore, the P content is preferably 0.001% or more, and more preferably 0.010% or more.

### <S: 0.0030% or less>

S is an element that forms sulfide-based inclusions and may decrease the properties of SOECs through volatilization to and poisoning of components such as electrodes. Therefore, the S content is 0.0030% or less, preferably 0.0028% or less, and further preferably 0.0025% or less. On the other hand, the lower limit of the S content is not particularly limited, but reducing the S content requires more time in a refining step, which may increase manufacturing costs. Therefore, the S content is preferably 0.0001% or more, and more preferably 0.0002% or more.

### <Cr: 16.0 to 21.0%>

Cr is a primary element for forming an oxide film primarily composed of a Cr₂O₃ film in a high-temperature environment containing a high concentration of oxygen and the like. When the Cr content is excessively low, a large amount of (FeMnCr)₃O₄ is formed, and the oxide film becomes thick, and therefore electrical conductivity decreases. For this reason, the Cr content is 16.0% or more, preferably 16.5% or more, and more preferably 17.0% or more. On the other hand, when the Cr content is excessively high, the Cr₂O₃ film forming the oxide film becomes thick, and therefore electrical conductivity decreases. For this reason, the Cr content is 21.0% or less, preferably 20.5% or less, and more preferably 20.0% or less.

### <Al: 1.00% or less>

Al is an element effective for promoting the formation of an oxide film and improving electrical conductivity. However, when the Al content is excessively high, a continuous Al₂O₃ oxide layer is formed, and electrical conductivity decreases. In addition, AlN serving as an origin of abnormal oxidation is likely to be formed, and the toughness of the stainless steel material may be impaired. Therefore, the Al content is 1.00% or less, preferably 0.95% or less, and more preferably 0.90% or less. On the other hand, the lower limit of the Al content is not particularly limited. From the viewpoint of obtaining the above effects of Al, the Al content is preferably 0.01% or more, and more preferably 0.02% or more.

### <N: 0.030% or less>

N is an element that may bond with Al to form AlN serving as an origin of abnormal oxidation and may reduce the toughness of the stainless steel material. Therefore, the N content is 0.030% or less, preferably 0.028% or less, and more preferably 0.025% or less. On the other hand, the lower limit of the N content is not particularly limited, but reducing the N content requires more time in a refining step, which may increase manufacturing costs. Therefore, the N content is preferably 0.001% or more, and more preferably 0.005% or more.

### <Nb: 1.00% or less>

Nb preferentially bonds with C and N to form Nb carbonitrides, promotes the formation of an oxide film, and contributes to improvement of electrical conductivity. However, when the Nb content is excessively high, the amount of Nb in solid solution that has not been consumed in the formation of Nb carbonitrides increases. As a result, toughness may be impaired due to hardening. Therefore, the Nb content is 1.00% or less, preferably 0.95% or less, and more preferably 0.90% or less. On the other hand, the lower limit of the Nb content is not particularly limited. From the viewpoint of obtaining the above effects of Nb, the Nb content is preferably 0.01% or more, and more preferably 0.02% or more.

### <Ti: 1.00% or less>

Ti, like Nb, preferentially bonds with C and N to form Ti carbonitrides, promotes the formation of an oxide film, and contributes to improvement of electrical conductivity. However, when the Ti content is excessively high, Ti carbonitrides become coarse, which serves as an origin and decreases toughness. Therefore, the Ti content is 1.00% or less, preferably 0.95% or less, and more preferably 0.90% or less. On the other hand, the lower limit of the Ti content is not particularly limited. From the viewpoint of obtaining the above effects of Ti, the Ti content is preferably 0.01% or more, and more preferably 0.02% or more.

### <Ni: 1.00% or less>

Ni is an element that improves the corrosion resistance of the stainless steel material and suppresses a decrease in toughness. However, since Ni is an austenite phase-stabilizing element, when the Ni content is excessively high, the coefficient of thermal expansion increases and properties such as thermal shock resistance decrease. Therefore, the Ni content is 1.00% or less, preferably 0.95% or less, and more preferably 0.90% or less. On the other hand, the lower limit of the Ni content is not particularly limited. From the viewpoint of obtaining the above effects of Ni, the Ni content is preferably 0.01% or more, and more preferably 0.02% or more.

### <Cu: 1.00% or less>

Cu is an element that improves the corrosion resistance and electrical conductivity of the stainless steel material. However, since Cu is an austenite phase-stabilizing element, when the Cu content is excessively high, the coefficient of thermal expansion increases and properties such as thermal shock resistance decrease. Therefore, the Cu content is 1.00% or less, preferably 0.95% or less, and more preferably 0.90% or less. On the other hand, the lower limit of the Cu content is not particularly limited. From the viewpoint of obtaining the above effects of Cu, the Cu content is preferably 0.01% or more, and more preferably 0.02% or more.

### <Mo: 0.50% or less>

Mo is a primary element for strengthening the oxide film of the stainless steel material, and is contained in the stainless steel material as necessary. In particular, Mo can improve properties such as corrosion resistance and heat resistance through the oxide film. In addition, Mo can also promote the formation of the oxide film on the stainless steel material and improve electrical conductivity. Typically, since the Cr oxides forming the oxide film contain Fe, electrical conductivity is low; however, by causing Mo to be present in the Cr oxides, electrical conductivity can be improved. However, when the Mo content is excessively high, properties such as toughness may be impaired due to hardening. Therefore, the Mo content is 0.50% or less, preferably 0.45% or less. On the other hand, the lower limit of the Mo content is not particularly limited. From the viewpoint of obtaining the above effects of Mo, the Mo content is preferably 0.01% or more, and more preferably 0.02% or more.

### <B: 0.0050% or less>

B is an element effective in increasing grain boundary strength by preferentially concentrating at grain boundaries to improve secondary workability, and is contained in the stainless steel material as necessary. However, when the B content is excessive, borides (Cr₂B) at grain boundaries coarsen, decreasing the resistance to chromium poisoning. Therefore, the B content is 0.0050% or less, preferably 0.0045% or less. On the other hand, the lower limit of the B content is not particularly limited. From the viewpoint of obtaining effects of B, the B content is preferably 0.0001% or more, and more preferably 0.0005% or more.

### <Mg: 0.0100% or less>

Mg is an element effective for refining of the stainless steel material, and is contained in the stainless steel material as necessary. However, when the Mg content is excessively high, the amount of inclusions formed increases, decreasing electrical conductivity. Therefore, the Mg content is 0.0100% or less, preferably 0.0090% or less. On the other hand, the lower limit of the Mg content is not particularly limited. From the viewpoint of obtaining the effects of Mg, the Mg content is preferably 0.0001% or more, and more preferably 0.0003% or more.

### <Ca: 0.0100% or less>

Ca is an element that fixes S to enhance oxidation resistance and promotes the formation of an oxide film, and is contained in the stainless steel material as necessary. However, when the Ca content is excessively high, the amount of inclusions formed increases, decreasing electrical conductivity. Therefore, the Ca content is 0.0100% or less, preferably 0.0095% or less, and more preferably 0.0090% or less. On the other hand, the lower limit of the Ca content is not particularly limited. From the viewpoint of obtaining effects of Ca, the Ca content is preferably 0.0001% or more, and more preferably 0.0005% or more.

### <V: 0.50% or less>

V is an element that improves the strength of the stainless steel material without impairing toughness thereof, and is contained in the stainless steel material as necessary. However, when the V content is excessively high, low-melting-point composite oxides are formed, significantly decreasing oxidation resistance, and costs increase. Therefore, the V content is 0.50% or less, preferably 0.45% or less. On the other hand, the lower limit of the V content is not particularly limited. From the viewpoint of obtaining the effects of V, the V content is preferably 0.01% or more, and more preferably 0.02% or more.

### <Co: 0.50% or less>

Co is an element that improves the strength of the stainless steel material without impairing toughness thereof, and is contained in the stainless steel material as necessary. However, when the Co content is excessively high, workability and toughness may decrease, and costs increase. Therefore, the Co content is 0.50% or less, preferably 0.45% or less. On the other hand, the lower limit of the Co content is not particularly limited. From the viewpoint of obtaining effects of Co, the Co content is preferably 0.01% or more, and more preferably 0.02% or more.

### <W: 0.50% or less>

W is an element that improves the strength of the stainless steel material without impairing toughness thereof, and is contained in the stainless steel material as necessary. However, when the W content is excessively high, workability and toughness may decrease, and costs increase. Therefore, the W content is 0.50% or less, preferably 0.45% or less. On the other hand, the lower limit of the W content is not particularly limited. From the viewpoint of obtaining effects of W, the W content is preferably 0.01% or more, and more preferably 0.02% or more.

### <Sn: 0.50% or less>

Sn is an element effective for improving corrosion resistance and conductivity, and is contained in the stainless steel material as necessary. However, when the Sn content is excessively high, hot workability and toughness decrease. Therefore, the Sn content is 0.50% or less, preferably 0.40% or less. On the other hand, the lower limit of the Sn content is not particularly limited. From the viewpoint of obtaining effects of Sn, the Sn content is preferably 0.01% or more, and more preferably 0.02% or more.

### <Zr: 0.50% or less>

Zr is an element that fixes C to increase an effective Cr content of the stainless steel material, and is contained in the stainless steel material as necessary. However, when the Zr content is excessively high, workability of the stainless steel material decreases. Therefore, the Zr content is 0.50% or less, preferably 0.45% or less. On the other hand, the lower limit of the Zr content is not particularly limited. From the viewpoint of obtaining effects of Zr, the Zr content is preferably 0.01% or more, and more preferably 0.02% or more.

### <Ga: 0.05% or less>

Ga is an element that improves the hot workability of the stainless steel material, and is contained in the stainless steel material as necessary. However, when the Ga content is excessively high, manufacturability decreases. Therefore, the Ga content is 0.05% or less, preferably 0.04% or less. On the other hand, the lower limit of the Ga content is not particularly limited. From the viewpoint of obtaining effects of Ga, the Ga content is preferably 0.01% or more.

### <Hf: 0.10% or less>

Hf is an element that fixes C to increase an effective Cr content of the stainless steel material, and is contained in the stainless steel material as necessary. However, when the Hf content is excessively high, workability of the stainless steel material decreases. Therefore, the Hf content is 0.10% or less, preferably 0.09% or less. On the other hand, the lower limit of the Hf content is not particularly limited. From the viewpoint of obtaining effects of Hf, the Hf content is preferably 0.01% or more, and more preferably 0.02% or more.

### <REM: 0.10% or less>

REM (rare earth elements) preferentially bonds with S and P to form compounds, and therefore can suppress a decrease in electrical conductivity caused by S and P. REM is contained in the stainless steel material as necessary. However, when the REM content is excessively high, the stainless steel material may harden, and toughness and workability may decrease. Therefore, the REM content is 0.10% or less, preferably 0.09% or less. On the other hand, the lower limit of the REM content is not particularly limited. From the viewpoint of obtaining effects of REM, the REM content is preferably 0.01% or more, and more preferably 0.02% or more.

REM is a collective term for two elements, scandium (Sc) and yttrium (Y), and 15 elements from lanthanum (La) to lutetium (Lu) (lanthanoids). These may be used alone or as a mixture. Among REM, La and Y are preferred.

The stainless steel material according to an embodiment of the present invention can have a passive film on a surface thereof.

This passive film means a film formed in a normal atmospheric atmosphere, unlike the oxide film formed in a solid oxide water electrolysis environment described later.

For this passive film, changes in the concentrations of O, Fe, Cr, Si, Mn, Ni, Mo, Nb, Ti, and Al from the surface in a depth direction are measured by glow discharge optical emission spectroscopy (hereinafter referred to as "GDS"), and when converted so that the total amount of elements other than O is 100 mass%, it is preferable that the maximum value of Si concentration be from 25 mass% to 40 mass%. If the maximum value of Si concentration is within such a range, in a case where an oxide film is formed under a solid oxide water electrolysis environment, an oxide film primarily composed of a Cr₂O₃ film having a small thickness is easily formed while suppressing the formation of a continuous SiO₂ film.

Here, the passive film is identified in GDS as follows. In a Cr concentration profile in the depth direction obtained by GDS, an average value of Cr concentration is determined using the maximum value of Cr concentration and a Cr concentration value at a position at a depth of 1 µm, and a first position in the depth direction at which the Cr concentration becomes smaller than the average value is defined as a boundary between the passive film and the base material. Therefore, a region from the surface to the first position in the depth direction at which the Cr concentration becomes smaller than the average value is defined as the passive film, and a region deeper than the first position in the depth direction at which the Cr concentration becomes smaller than the average value is defined as the base material. In the measurement of Si concentration by GDS, a peak due to contamination tends to occur in a region from the surface to a depth of 0.5 nm, and therefore, data at a position at a depth of 0.5 nm from the surface is excluded.

It is preferable that the stainless steel material according to an embodiment of the present invention, when oxidized under a solid oxide water electrolysis environment, have a surface resistance at 700°C of 100 mΩ/cm² or less, and more preferably 50 mΩ/cm² or less. When the surface resistance is within such a range, it can be said that the material is excellent in electrical conductivity under a solid oxide water electrolysis environment.

Here, the surface resistance can be measured by the method described in Examples described later.

As used herein, the term "solid oxide water electrolysis environment" means environmental conditions in which an oxygen concentration is 50 vol% or more and a temperature is from 700°C to 800°C.

It is preferable that the stainless steel material according to an embodiment of the present invention, when an oxide film formed on a surface when oxidized under a solid oxide water electrolysis environment is analyzed by measuring changes in the concentrations of O, Fe, Cr, Si, Mn, Ni, Mo, Nb, Ti, and Al from the surface in a depth direction by glow discharge optical emission spectroscopy and converting so that the total amount of elements other than O is 100 mass%, have a maximum value of Si concentration of 10 mass% or less, a maximum value of Mn concentration of 5 mass% or more, and a thickness of 3.0 µm or less. When the oxide film has a maximum value of Si concentration, a maximum value of Mn concentration, and a thickness within such ranges, it can be said that an oxide film primarily composed of a Cr₂O₃ film having a small thickness is formed while suppressing the formation of a continuous SiO₂ film. From the viewpoint of obtaining an oxide film having better electrical conductivity, it is preferable that the maximum value of Si concentration be 5 mass% or less, the maximum value of Mn concentration be 15 mass% or more, and the thickness be 2.0 µm or less. The lower limit of the maximum value of Si concentration is not particularly limited, but it is, for example, 1 mass%. The upper limit of the maximum value of Mn concentration is not particularly limited, but it is, for example, 50 mass%. Further, the lower limit of the thickness is not particularly limited, but it is, for example, 0.3 µm.

Here, the oxide film is identified in GDS as follows. In a Cr concentration profile in the depth direction obtained by GDS, an average value of Cr concentration is determined using the maximum value of Cr concentration and a Cr concentration value at a position at a depth of 10 µm, and a first position in the depth direction at which the Cr concentration becomes smaller than the average value is defined as a boundary between the oxide film and the base material. Therefore, a region from the surface to the first position in the depth direction at which the Cr concentration becomes smaller than the average value is defined as the oxide film, and a region deeper than the first position in the depth direction at which the Cr concentration becomes smaller than the average value is defined as the base material.

The stainless steel material according to an embodiment of the present invention can have an oxide film on a surface thereof. This oxide film is formed under a solid oxide water electrolysis environment.

It is preferable that the stainless steel material having an oxide film on a surface thereof have a surface resistance at 700°C of 100 mΩ/cm² or less, and more preferably 50 mΩ/cm² or less.

For the stainless steel material having an oxide film on a surface thereof, when changes in the concentrations of O, Fe, Cr, Si, Mn, Ni, Mo, Nb, Ti, and Al from the surface in a depth direction are measured by glow discharge optical emission spectroscopy and converted so that the total amount of elements other than O is 100 mass%, it is preferable that the maximum value of Si concentration of the oxide film be 10 mass% or less, the maximum value of Mn concentration be 5 mass% or more, and the thickness be 3.0 µm or less, and it is more preferable that the maximum value of Si concentration of the oxide film be 5 mass% or less, the maximum value of Mn concentration be 15 mass% or more, and the thickness be 2.0 µm or less.

The shape of the stainless steel material according to an embodiment of the present invention is not particularly limited, but it is preferably a plate shape or a foil shape. When the stainless steel material has a plate shape or a foil shape, a thickness thereof is, for example, from 0.1 mm to 5.0 mm, preferably from 0.1 mm to 3.0 mm, more preferably from 0.1 mm to 1.0 mm, and further preferably from 0.1 mm to 0.5 mm.

The stainless steel material according to an embodiment of the present invention can be produced in accordance with known methods except for using a slab having the above composition.

An example of a typical method for producing the stainless steel material according to an embodiment of the present invention is described here. It should be noted that the method for producing the stainless steel material according to an embodiment of the present invention is not limited to the production method described below.

The stainless steel material according to an embodiment of the present invention can be produced by hot rolling a slab having the above composition, followed by cold rolling and annealing.

The conditions for hot rolling and cold rolling are not particularly limited and can be performed in accordance with known methods. The annealing conditions are also not particularly limited, but it is preferable to perform annealing at a temperature of from 900°C to 1100°C.

After annealing, it is preferable to descale by pickling and/or polishing, and it is more preferable to descale by pickling. Pickling has a higher effect of improving electrical conductivity than polishing. Pickling can be performed, for example, using a mixed acid of nitric acid (10 to 30%) and hydrofluoric acid (1 to 10%) at from 30°C to 60°C. Polishing can be performed using an abrasive having a grit number of #100 to #1000.

Annealing and pickling may also be performed after hot rolling.

Furthermore, a stainless steel material having an oxide film on a surface thereof can be produced by using the stainless steel material in a solid oxide water electrolysis environment. Alternatively, a stainless steel material having an oxide film on a surface thereof can be produced by performing heat treatment under the same conditions as those of a solid oxide water electrolysis environment. Specifically, a stainless steel material having an oxide film on a surface thereof can be produced by heating to from 700°C to 800°C in an atmosphere containing 50 vol% or more of oxygen. By performing the heat treatment under such conditions, an oxide film having the above properties can be stably formed.

Since the composition (particularly the contents of Si, Cr, and Mn) of the stainless steel material according to an embodiment of the present invention is appropriately controlled, it is possible to form an oxide film primarily composed of a Cr₂O₃ film having a small thickness while suppressing the formation of a continuous SiO₂ film in a high-temperature environment containing a high concentration of oxygen and the like. Therefore, the stainless steel material according to an embodiment of the present invention is suitable for use in solid oxide water electrolysis in which the material is exposed to a high-temperature environment containing a high concentration of oxygen and the like.

When the stainless steel material according to an embodiment of the present invention is used for solid oxide water electrolysis, the stainless steel material can be used for various components such as separators, interconnects, current collectors, and metal supports.

### [Examples]

The content of the present invention will be described below in detail with reference to Examples, but the present invention is not construed as being limited thereto.

A slab having the composition shown in Table 1 (the balance being Fe and impurities) was smelted, hot-rolled to form a hot-rolled sheet having a thickness of 3.5 mm, and then annealed and pickled. The hot-rolled sheet was then cold-rolled to form a cold-rolled sheet having a thickness of 0.3 mm, and then annealed at 980°C. The annealed sheet was then descaled by pickling with a mixed acid of nitric acid (15%) and hydrofluoric acid (3%) at 50°C, or by polishing using an abrasive having a grit number of #600, to obtain a cold-rolled, annealed sheet (stainless steel sheet). These postannealing treatments are shown in Table 2, with those subjected to pickling indicated as "Pickled" and those subjected to polishing indicated as "Polished."

**[Table 1]**

| Steel Nos. | Composition (% by mass) | | | | | | | | | | | | |
|---|---|---|---|---|---|---|---|---|---|---|---|---|---|
| | C | Si | Mn | P | S | Cr | Al | N | Nb | Ti | Ni | Cu | Other |
| A | 0.015 | 2.6 | 0.27 | 0.027 | 0.0015 | 17.7 | 0.03 | 0.01 1 | 0.29 | 0.01 | 0.10 | 0.05 | Mo: 0.06, B: 0.0009, Mg: 0.0004, Ca: 0.0015, V: 0.09, Co: 0.01, Sn: 0.01 |
| B | 0.017 | 2.5 | 0.31 | 0.033 | 0.0011 | 18.0 | 0.09 | 0.015 | 0.35 | 0.02 | 0.15 | 0.11 | Zr: 0.01, Ga: 0.01, Hf 0.01, REM: 0.02 |
| c | 0.003 | 3.0 | 0.90 | 0.035 | 0.0023 | 19.5 | 0.02 | 0.025 | 0.02 | 0.85 | 0.79 | 0.03 | Mo: 0.01, B: 0.0020 |
| D | 0.028 | 2.0 | 0.17 | 0.029 | 0.0010 | 16.1 | 0.55 | 0.008 | 0.25 | 0.02 | 0.11 | 0.08 | Zr: 0.02, Ga: 0.01, Hf 0.01, REM: 0.04 |
| E | 0.016 | 3.3 | 0.50 | 0.025 | 0.0011 | 17.2 | 0.45 | 0.019 | 0.45 | 0.02 | 0.15 | 0.03 | -- |
| F | 0.028 | 1.8 | 0.11 | 0.043 | 0.0025 | 20.5 | 0.90 | 0.007 | 0.02 | 0.86 | 0.90 | 0.20 | Mg: 0.0089, Ca: 0.0092, Co: 0.44, W: 0.45, Ga: 0.05, REM: 0.08 |
| G | 0.009 | 1.6 | 0.40 | 0.010 | 0.0013 | 18.8 | 0.20 | 0.027 | 0.85 | 0.25 | 0.05 | 0.89 | Mo: 0.43, B: 0.0044, V: 0.42, Sn: 0.35, Zr: 0.43 |
| H | 0.010 | 1.0 | 0.15 | 0.031 | 0.0029 | 17.1 | 0.05 | 0.011 | 0.15 | 0.15 | 0.15 | 0.04 | -- |
| I | 0.010 | 3.6 | 0.15 | 0.031 | 0.0029 | 20.1 | 0.05 | 0.011 | 0.31 | 0.15 | 0.15 | 0.04 | -- |
| J | 0.012 | 2.1 | 0.07 | 0.025 | 0.0018 | 18.5 | 0.10 | 0.014 | 0.29 | 0.13 | 0.11 | 0.07 | -- |
| K | 0.021 | 1.8 | 1.15 | 0.022 | 0.0009 | 18.7 | 0.09 | 0.012 | 0.35 | 0.01 | 0.25 | 0.11 | -- |
| L | 0.018 | 1.9 | 0.35 | 0.019 | 0.0019 | 15.5 | 0.51 | 0.021 | 0.51 | 0.11 | 0.19 | 0.09 | -- |
| M | 0.016 | 2.1 | 0.19 | 0.015 | 0.0025 | 21.5 | 0.33 | 0.012 | 0.19 | 0.12 | 0.11 | 0.03 | -- |
| N | 0.018 | 1.7 | 0.45 | 0.011 | 0.0012 | 17.9 | 0.09 | 0.022 | 0.25 | -- | 0.11 | 0.08 | -- |
| O | 0.017 | 1.7 | 0.45 | 0.012 | 0.0013 | 17.8 | 0.08 | 0.025 | 0.23 | 0.13 | -- | 0.04 | -- |
| P | 0.018 | 1.7 | 0.40 | 0.011 | 0.0012 | 18.1 | 0.12 | 0.023 | 0.24 | 0.12 | 0.11 | -- | -- |
| The underlines indicate that they are outside the scope of this invention. | | | | | | | | | | | | | |

Next, the following evaluations were performed on the cold-rolled, annealed sheet obtained.

### (Maximum Value of Si Concentration in Passive Film)

Glow discharge optical emission spectroscopy (GDS) was performed on the cold-rolled, annealed sheet to measure changes in the concentrations of O, Fe, Cr, Si, Mn, Ni, Mo, Nb, Ti, and Al from the surface in a depth direction. In the element concentration profile in the depth direction of the passive film obtained by this analysis, the maximum value of Si concentration (which may be expressed as "Si(Max)") when converted so that the total amount of elements other than O is 100 mass% was determined. In this measurement, data in a region from the surface to a depth of 0.5 nm was excluded because the influence of contamination is significant.

GDS was performed under conditions of an Ar gas pressure of 600 Pa, a power of 35 W, a frequency of 100 Hz, and a duty cycle of 0.25.

A test specimen was then cut out from the cold-rolled, annealed sheet and subjected to an oxidation treatment by being exposed to a gas atmosphere containing 60 vol% of O₂ and 40 vol% of N₂ at 800°C for 200 hours, thereby forming an oxide film on the surface.

The following evaluations were performed on the test specimen after the oxidation treatment.

### (Oxidation Resistance)

An increased mass [mg] of the test specimen after the oxidation treatment relative to the test specimen before the oxidation treatment was determined, and an oxidation mass gain was then calculated by dividing the increased mass by a surface area [cm²] of the test specimen after the oxidation treatment.

In this evaluation, a case where the oxidation mass gain was 0.5 mg/cm² or less was expressed as A (excellent oxidation resistance), a case where the oxidation mass gain was more than 0.5 mg/cm² and 1.0 mg/cm² or less was expressed as B (good oxidation resistance), and a case where the oxidation mass gain was more than 1.0 mg/cm² was expressed as C (insufficient oxidation resistance).

### (Maximum Value of Si Concentration, Maximum Value of Mn Concentration, and Thickness of Oxide Film)

Glow discharge optical emission spectroscopy (GDS) was performed on the test specimen after the oxidation treatment to measure changes in the concentrations of O, Fe, Cr, Si, Mn, Ni, Mo, Nb, Ti, and Al from the surface in a depth direction. In the element concentration profile in the depth direction of the oxide film obtained by this analysis, the maximum value of Si concentration (which may be expressed as "Si(Max)") and the maximum value of Mn concentration (which may be expressed as "Mn(Max)") when converted so that the total amount of elements other than O is 100 mass% were determined. The oxide film was identified from this element concentration profile in the depth direction as described above, and the thickness thereof was determined.

The GDS conditions were the same as described above.

### (Surface Resistance)

Using two test specimens after the oxidation treatment, a measurement test specimen as shown in Fig. 1 was prepared, and measurement was performed by a four-terminal method using a potentiostat. Specifically, the procedure was as follows.

First, a conductive paste (Ag paste) was applied in a square shape (one side of 10 mm, a thickness of 10 µm) to a central portion of each of the two test specimens 10 and dried to form a conductive portion 20. The conductive portions 20 of the two test specimens 10 were then overlapped and arranged in a cross shape, and then sandwiched between alumina plates, and a weight (200 g) was placed thereon, and the conductive portions 20 were baked in an electric furnace. The surface was then ground using a miniter until the metal base material was exposed to form a wiring attachment portion 30. A silver wire 40 (φ0.3 mm) was then wound around the wiring attachment portion 30, and a conductive paste was applied to obtain a measurement test specimen. This measurement test specimen was then placed in a high-temperature electrochemical measurement apparatus, and a voltage-current curve was obtained by a four-terminal method using a potentiostat. In this measurement, the measurement temperature was 700°C, and the voltage was swept to 10 mV. A resistance value was calculated from the slope of the voltage-current curve.

In this evaluation, it can be determined that when the resistance value is 50 mΩ/cm² or less, electrical conductivity is excellent, when the resistance value is more than 50 mΩ/cm² and 100 mΩ/cm² or less, electrical conductivity is good, and when the resistance value is more than 100 mΩ/cm², electrical conductivity is insufficient.

Table 2 shows the above evaluation results.

**[Table 2]**

| | Steel Nos. | Post-Annealing Treatment | Passive Film | Oxidation resistance | Oxide Film | | | Surface Resistance (m Ω/cm²) |
|---|---|---|---|---|---|---|---|---|
| | | | Si(Max) (mass%) | | Si(Max) (mass%) | Mn(Max) (mass%) | Thickness (µm) | |
| Example 1 | A | Pickled | 37 | A | 3 | 32 | 0.9 | 30 |
| Example 2 | A | Polished | 22 | A | 5 | 35 | 0.7 | 34 |
| Example 3 | B | Pickled | 35 | A | 3 | 37 | 0.8 | 25 |
| Example 4 | B | Polished | 26 | A | 5 | 39 | 0.7 | 33 |
| Example 5 | C | Pickled | 39 | B | 4 | 41 | 2.5 | 89 |
| Example 6 | c | Polished | 31 | B | 5 | 42 | 2.2 | 90 |
| Example 7 | D | Pickled | 32 | A | 3 | 21 | 1.7 | 41 |
| Example 8 | D | Polished | 25 | A | 4 | 29 | 1.5 | 45 |
| Example 9 | E | Pickled | 43 | A | 8 | 35 | 1.5 | 92 |
| Example 10 | E | Polished | 35 | A | 5 | 38 | 1.3 | 48 |
| Example 11 | F | Pickled | 24 | B | 2 | 8 | 2.3 | 69 |
| Example 12 | F | Polished | 22 | B | 3 | 9 | 2.1 | 74 |
| Example 13 | G | Pickled | 23 | B | 2 | 30 | 2.2 | 55 |
| Example 14 | G | Polished | 21 | B | 3 | 34 | 2.1 | 59 |
| Comparative Example 1 | H | Pickled | 19 | c | 1 | 16 | 3.5 | 115 |
| Comparative Example 2 | I | Pickled | 51 | A | 12 | 15 | 0.8 | 168 |
| Comparative Example 3 | J | Pickled | 31 | A | 7 | 4 | 0.7 | 132 |
| Comparative Example 4 | K | Pickled | 27 | c | 3 | 47 | 3.3 | 105 |
| Comparative Example 5 | L | Pickled | 29 | c | 3 | 39 | 3.3 | 109 |
| Comparative Example 6 | M | Pickled | 32 | c | 3 | 14 | 3.2 | 129 |
| Comparative Example 7 | N | Pickled | 22 | B | 2 | 30 | 3.2 | 105 |
| Comparative Example 8 | O | Pickled | 23 | B | 3 | 32 | 3.3 | 103 |
| Comparative Example 9 | P | Pickled | 22 | B | 2 | 28 | 3.2 | 105 |
| The underlines indicate that they are outside the scope of this invention. | | | | | | | | |

As shown in Table 2, the cold-rolled, annealed sheets (stainless steel sheets) according to Examples 1 to 14 had a predetermined composition, and therefore had good oxidation resistance, and after the oxidation treatment, the surface resistance was also lower and the electrical conductivity was good.

In contrast, the cold-rolled, annealed sheet of Comparative Example 1 had an excessively low Si content, and therefore the oxide film became thicker. As a result, the surface resistance was higher and the electrical conductivity was poor.

The cold-rolled, annealed sheet according to Comparative Example 2 had an excessively high Si content, and therefore a continuous SiO₂ film was formed directly beneath the Cr₂O₃ film. As a result, the surface resistance was higher and the electrical conductivity was poor.

The cold-rolled, annealed sheet according to Comparative Example 3 had an excessively low Mn content, and therefore composite oxides with Si could not be sufficiently formed, and a continuous SiO₂ film was formed. As a result, the surface resistance was higher and the electrical conductivity was poor.

The cold-rolled, annealed sheet according to Comparative Example 4 had an excessively high Mn content, and therefore a large amount of (FeMnCr)₃O₄ was formed and the oxide film became thicker. As a result, the surface resistance was higher and the electrical conductivity was poor.

The cold-rolled, annealed sheet according to Comparative Example 5 had an excessively low Cr content, and therefore a large amount of (FeMnCr)₃O₄ was formed and the oxide film became thicker. As a result, the surface resistance was higher and the electrical conductivity was poor.

The cold-rolled, annealed sheet according to Comparative Example 6 had an excessively high Cr content, and therefore the Cr₂O₃ film forming the oxide film became thicker. As a result, the surface resistance was higher and the electrical conductivity was poor.

The cold-rolled, annealed sheet according to Comparative Example 7 did not contain Ti, and therefore the fixation of C and N by the formation of carbonitrides was insufficient and the oxide film became thicker. As a result, the surface resistance was higher and the electrical conductivity was poor.

The cold-rolled, annealed sheet according to Comparative Example 8 did not contain Ni, and therefore corrosion resistance decreased and the oxide film became thicker. As a result, the surface resistance was higher and the electrical conductivity was poor.

The cold-rolled, annealed sheet according to Comparative Example 9 did not contain Cu, and therefore corrosion resistance decreased and the oxide film became thicker. As a result, the surface resistance was higher and the electrical conductivity was poor.

As can be seen from the above results, according to the present invention, it is possible to provide a stainless steel material for solid oxide water electrolysis that can suppress oxidation in a high-temperature environment containing a high concentration of oxygen and the like, reduce the thickness of the oxide film, and ensure electrical conductivity.

Therefore, an embodiment of the present invention can have the following aspects.

<1> A stainless steel material for solid oxide water electrolysis, comprising, on a mass basis, C: 0.030% or less, Si: from 1.6% to 3.5%, Mn: from 0.10% to 1.00%, P: 0.050% or less, S: 0.0030% or less, Cr: from 16.0% to 21.0%, Al: 1.00% or less, N: 0.030% or less, Nb: 1.00% or less, Ti: 1.00% or less, Ni: 1.00% or less, and Cu: 1.00% or less, with the balance being Fe and impurities.
<2> The stainless steel material for solid oxide water electrolysis according to <1>, further comprising, on a mass basis, one or more selected from Mo: 0.50% or less, B: 0.0050% or less, Mg: 0.0100% or less, Ca: 0.0100% or less, V: 0.50% or less, Co: 0.50% or less, W: 0.50% or less, Sn: 0.50% or less, Zr: 0.50% or less, Ga: 0.05% or less, Hf: 0.10% or less, and REM: 0.10% or less.
<3> The stainless steel material for solid oxide water electrolysis according to <1> or <2>, wherein the stainless steel material has a passive film on a surface, and wherein, when changes in concentrations of O, Fe, Cr, Si, Mn, Ni, Mo, Nb, Ti, and Al from the surface in a depth direction are measured by glow discharge optical emission spectroscopy and converted so that a total amount of elements other than O is 100 mass%, a maximum value of Si concentration of the passive film is from 25 mass% to 40 mass%.
<4> The stainless steel material for solid oxide water electrolysis according to any one of <1> to <3>, wherein, when oxidized under a solid oxide water electrolysis environment, a surface resistance at 700°C is 100 mΩ/cm² or less.
<5> The stainless steel material for solid oxide water electrolysis according to any one of <1> to <4>, wherein, when changes in concentrations of O, Fe, Cr, Si, Mn, Ni, Mo, Nb, Ti, and Al from a surface in a depth direction are measured by glow discharge optical emission spectroscopy and converted so that a total amount of elements other than O is 100 mass%, an oxide film formed on the surface when oxidized under a solid oxide water electrolysis environment has a maximum value of Si concentration of 10 mass% or less, a maximum value of Mn concentration of 5 mass% or more, and a thickness of 3.0 µm or less.
<6> The stainless steel material for solid oxide water electrolysis according to any one of <1> to <5>, wherein the stainless steel material has an oxide film on a surface thereof.
<7> The stainless steel material for solid oxide water electrolysis according to <6>, wherein the stainless steel material has a surface resistance at 700°C of 100 mΩ/cm² or less.
<8> The stainless steel material for solid oxide water electrolysis according to <6> or <7>, wherein, when changes in concentrations of O, Fe, Cr, Si, Mn, Ni, Mo, Nb, Ti, and Al from the surface in a depth direction are measured by glow discharge optical emission spectroscopy and converted so that a total amount of elements other than O is 100 mass%, the oxide film has a maximum value of Si concentration of 10 mass% or less, a maximum value of Mn concentration of 5 mass% or more, and a thickness of 3.0 µm or less.
<9> The stainless steel material for solid oxide water electrolysis according to any one of <1> to <8>, wherein the stainless steel material is used for one or more members selected from a separator, an interconnect, a current collector, and a metal support.

### [Description of Reference Numerals]

10 test specimen
20 conductive portion
30 wiring attachment portion
40 silver wire

## Claims

1. A stainless steel material for solid oxide water electrolysis, comprising, on a mass basis, C: 0.030% or less, Si: from 1.6% to 3.5%, Mn: from 0.10% to 1.00%, P: 0.050% or less, S: 0.0030% or less, Cr: from 16.0% to 21.0%, Al: 1.00% or less, N: 0.030% or less, Nb: 1.00% or less, Ti: 1.00% or less, Ni: 1.00% or less, and Cu: 1.00% or less, with the balance being Fe and impurities.

2. The stainless steel material for solid oxide water electrolysis according to claim 1, further comprising, on a mass basis, one or more selected from Mo: 0.50% or less, B: 0.0050% or less, Mg: 0.0100% or less, Ca: 0.0100% or less, V: 0.50% or less, Co: 0.50% or less, W: 0.50% or less, Sn: 0.50% or less, Zr: 0.50% or less, Ga: 0.05% or less, Hf: 0.10% or less, and REM: 0.10% or less.

3. The stainless steel material for solid oxide water electrolysis according to claim 1 or 2, wherein the stainless steel material has a passive film on a surface, and
wherein, when changes in concentrations of O, Fe, Cr, Si, Mn, Ni, Mo, Nb, Ti, and Al from the surface in a depth direction are measured by glow discharge optical emission spectroscopy and converted so that a total amount of elements other than O is 100 mass%, a maximum value of Si concentration of the passive film is from 25 mass% to 40 mass%.

4. The stainless steel material for solid oxide water electrolysis according to claim 1 or 2, wherein, when oxidized under a solid oxide water electrolysis environment, a surface resistance at 700°C is 100 mΩ/cm² or less.

5. The stainless steel material for solid oxide water electrolysis according to claim 1 or 2, wherein, when changes in concentrations of O, Fe, Cr, Si, Mn, Ni, Mo, Nb, Ti, and Al from a surface in a depth direction are measured by glow discharge optical emission spectroscopy and converted so that a total amount of elements other than O is 100 mass%, an oxide film formed on the surface when oxidized under a solid oxide water electrolysis environment has a maximum value of Si concentration of 10 mass% or less, a maximum value of Mn concentration of 5 mass% or more, and a thickness of 3.0 µm or less.

6. The stainless steel material for solid oxide water electrolysis according to claim 1 or 2, wherein the stainless steel material has an oxide film on a surface thereof.

7. The stainless steel material for solid oxide water electrolysis according to claim 6, wherein the stainless steel material has a surface resistance at 700°C of 100 mΩ/cm² or less.

8. The stainless steel material for solid oxide water electrolysis according to claim 6, wherein, when changes in concentrations of O, Fe, Cr, Si, Mn, Ni, Mo, Nb, Ti, and Al from the surface in a depth direction are measured by glow discharge optical emission spectroscopy and converted so that a total amount of elements other than O is 100 mass%, the oxide film has a maximum value of Si concentration of 10 mass% or less, a maximum value of Mn concentration of 5 mass% or more, and a thickness of 3.0 µm or less.

9. The stainless steel material for solid oxide water electrolysis according to claim 1 or 2, wherein the stainless steel material is used for one or more members selected from a separator, an interconnect, a current collector, and a metal support.
